# EUROPÄISCHE PATENTSCHRIFT

(11) **EP 1 658 902 B1**
(45) Veröffentlichungstag und Bekanntmachung des Hinweises auf die Patenterteilung: **08.12.2010**
(21) Anmeldenummer: 05019916.5
(22) Anmeldetag: 13.09.2005
(51) Int. Cl.: B05B 7/12, B23Q 11/10, F16N 7/34

(54) **Steuermodul für eine Düsenanordnung**
Control module for nozzle assembly
Module de commande pour un ensemble de buses

(30) Priorität: 18.11.2004 DE 102004055737
(43) Veröffentlichungstag der Anmeldung: 24.05.2006
(73) Patentinhaber: microjet GmbH, 76228 Karlruhe (DE)
(72) Erfinder: Wendler, Thomas, 76689 Karlsdorf-Neuthard (DE); Link, Edmar, 76228 Karlsruhe (DE)
(74) Vertreter: Liesegang, Roland

(56) Entgegenhaltungen:
- DE-U1- 20 112 812
- US-A- 2 252 200
- US-A- 5 226 506
- US-A1- 2003 136 862
- US-A1- 2004 144 872

## Beschreibung

Die Erfindung betrifft ein Steuermodul für eine Düsenanordnung mit Zweistoffdüsen zum Besprühen der Wirkzonen zwischen einem Werkzeug und einem Werkstück mit einem Gas-/Flüssigkeitsgemisch, gemäß dem Oberbegriff des Patentanspruchs 1, wie aus der US-A-5 226 506 bekannt.

Um die Reibung zwischen einem Formwerkzeug und einer Werkstückoberfläche, z.B. der Oberfläche eines Bleches, beim Biegen oder Stanzen zu vermindern, ist es üblich, vor dem Umformungsvorgang auf die Werkstückoberfläche einen Ölfilm mittels eines Aufwalzsystems mit zwei koaxial zueinander ausgerichteten Auftragswalzen aufzubringen. Dabei ist es schwierig, geringe, definierte Ölfilmdicken zu erreichen, so dass einerseits die Dicke des Ölfilmes ungleichmäßig und folglich örtlich zu gering zum Erzielen der gewünschten Reibungsverhältnisse werden kann und andererseits der Ölverbrauch hoch ist.

Für unterschiedliche Werkstoffe müssen Öle unterschiedlicher Qualität eingesetzt werden. Bei einer Änderung des Werkstoffes des zu formenden Werkstückes oder Bleches müssen deshalb die Walzen zum Aufbringen des Ölfilms gewechselt werden. Dies ist zeitaufwendig und erfordert außerdem die Lagerhaltung unterschiedlicher Walzen in einem Walzenmagazin.

Es wird auch schon praktiziert, das die Reibung mindernde Öl mittels Sprühdüsen auf die Werkstückoberfläche aufzubringen. Solche Sprühdüsen vernebeln jedoch das Stanzöl, was gesundheitsgefährdend für das Bedienungspersonal ist. Deshalb müssen aufwendige Absauganlagen eingesetzt werden, welche wiederum zu hohem Verbrauch des teuren Schmieröls führen.

Auch bei der spanenden Bearbeitung von Werkstücken, insbesondere bei Bearbeitungszentren mit mehreren Werkzeugspindeln, muss ein Schmieröl in die Wirkzone zwischen dem spanabhebenden Werkzeug und dem Werkstück gebracht werden. Hier kann es beim Einsatz von Zweistoffdüsen zum Sprühen eines Gas-/Flüssigkeitsgemisches ebenfalls zu einer Vemebelung des versprühten Schmieröles kommen.

Es ist eine Minimalmengen-Kühlschmiervorrichtung mit Zweistoffdüsen an sich bekannt, die in Betrieb eine gesundheitsgefährdende Vernebelung des Schmieröls vermeidet (DE 37 43 968 C1, DE 102 22 863 C1).
Auch ist ein Zerstäuber zum Dosieren von Flüssigkeiten in kleinsten Mengen bekannt ,der ein einer Zerstäuberdüse vorgeschaltetes Absperrventil für die Flüssigkeit hat, das pneumatisch betätigbar ist (DE 201 12 812 U1).

Der Erfindung liegt die Aufgabe zugrunde, ein Steuermodul zu schaffen, mit dem es möglich ist, einen gleichmäßigen, dünnen Flüssigkeitsfilm auf die Oberfläche eines umzuformenden Werkstückes in der Wirkzone eines Umformwerkzeuges aufzubringen, wobei der Flüssigkeitsverbrauch minimiert und eine aufwendige Absauganlage vermieden werden sollen.

Zur Lösung dieser Aufgabe dient ein Steuermodul für eine Düsenanordnung mit den Merkmalen des Patentanspruchs 1.

Vorteilhafte Ausgestaltungen der Erfindung und bevorzugte Verwendungen sind in den Unteransprüchen unter Schutz gestellt.

Bei einem Steuermodul nach der Erfindung lässt sich auf einfache Weise, nämlich durch pneumatisches Ansteuern der Steuervorrichtung, jede gewünschte Flüssigkeitsfilmbreite und -dicke des mittels der Zweistoffdüsen auf die Werkstückoberfläche aufgesprühten Flüssigkeitsfilmes erreichen.

Der Einsatz von Zweistoffdüsen gemäß DE 37 43 968 C1, insbesondere gemäß DE 102 22 863 C1, führt zu einer praktisch nebelfreien Versprühung, so dass aufwendige Absauganlagen überflüssig sind. Der Flüssigkeitsverbrauch kann minimal gehalten werden.

Ein Steuermodul nach der Erfindung ermöglicht es, in Anpassung an das Metall des umzuformenden Werkstückes ohne Auswechselung von Teilen schnell auf eine andere Flüssigkeit (Ölsorte) umzuschalten. Als Werkstoffe kommen Metalle aller Art von LE-Metallen bis Stahl in Betracht.

Dank der Ausstattung der Stopfbuchse mit einem Flüssigkeitsvolumenbegrenzer, der vorzugsweise ein Zylinderkörper enthaltend den Hohlraum ist, sind die Ansprechzeiten kurz, und ein Nachtropfen beim Abschalten wird zuverlässig vermieden.

Die Erfindung ist im folgenden anhand schematischer Zeichnungen an einem Ausführungsbeispiel mit weiteren Einzelheiten näher erläutert.

Es zeigen:

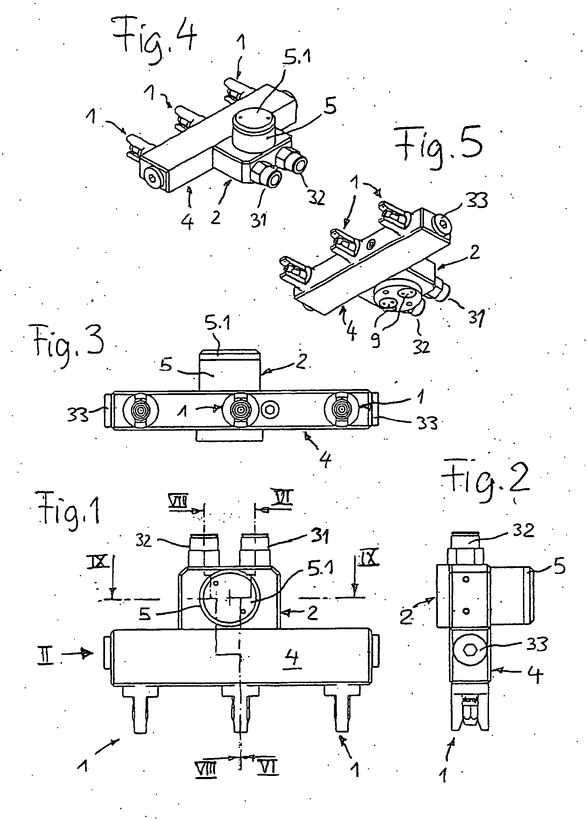

- Fig. 1 bis 5: Ansichten eines Steuermodules gemäß der Erfindung, nämlich: Fig. 1 eine Draufsicht, Fig. 2 eine Seitenansicht in Richtung des Pfeiles II, Fig. 3 eine Stirnansicht, Fig. 4 eine perspektivische Oberansicht und Fig. 5 eine perspektivische Unteransicht;
- Fig. 6: einen Schnitt nach der Linie VI-VI in Fig. 1;
- Fig. 7: eine Einzelheit bei VII in Fig. 6;
- Fig. 8: einen Schnitt nach der Linie VIII-VIII in Fig. 1;
- Fig. 9: einen Schnitt nach der Linie IX-IX in Fig. 1 und
- Fig. 10: eine Explosions-Darstellung des Steuermoduls gemäß den Fig. 1 bis 9.

Der in den Figuren gezeigte Steuermodul hat einen Modulkörper 2 und ein damit fest verbundenes Düsengehäuse 4. Das Düsengehäuse enthält eine Durchgangsbohrung 4.1, welche sich in Längsrichtung des Düsengehäuses erstreckt und an beiden Enden durch Verschlußstopfen 33 verschlossen ist. In dem Düsengehäuse sind in gleichmäßigen Abständen c in einer Reihe parallele Düsenaufnahmebohrungen 4.2 vorgesehen, welche die Durchgangsbohrung 4.1 anschneiden. Jede Bohrung 4.2 nimmt eine Zweistoffdüse 1 auf, die je einen Düsenmantel 1.1, einen Düsenkern 1.2 und einen Luftmantelerzeuger 1.3 aufweist. Insoweit stimmt jede Zweistoffdüse mit einer in der DE 102 22 863 C1 beschriebenen Zweistoffdüse überein. Zusätzlich ist jede Zweistoffdüse 1 von einem Strahlformaufsatz 34 mit zwei diagonal gegenüberliegenden Strahlformdüsen 36 umgeben, welche in einem Winkel α zwischen 90° und 120° bezüglich der Längsachse jeder Zweistoffdüse auf den daraus austretenden Gemischstrahl aus Luft und Schmieröl gerichtet sind, um diesen Gemischstrahl flach zu drücken derart, daß die aus zwei benachbarten Zweistoffdüsen austretenden Gemischstrahlen einander berühren oder überlappen.

Gemischstrahlbildung sowie Aufbau und Funktion der Zweistoffdüse 1 sind im einzelnen in der DE 37 43 968 C1 und der DE 102 22 863 C1 beschrieben, auf die verwiesen wird.

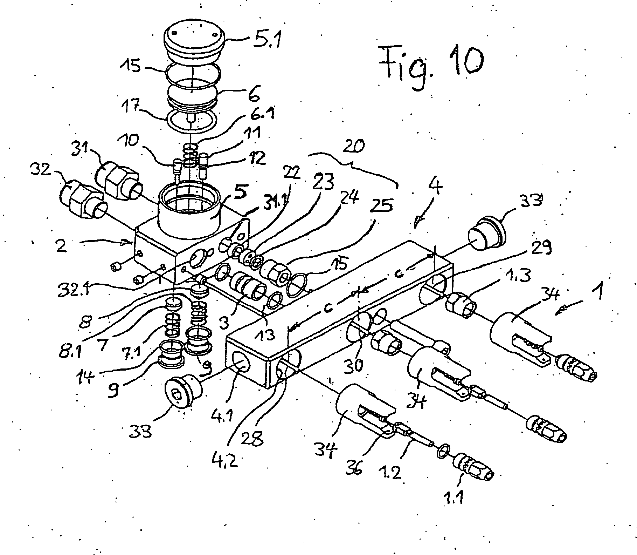

Jeder Modulkörper 2 enthält einen Ölanschluß 31 in Gestalt einer Steckverschraubung für einen Ölzufuhrschlauch sowie einen Luftanschluß 32 in Gestalt einer Steckverschraubung für einen Luftzuführschlauch. Die beiden Anschlüsse 31, 32 sind parallel zu den Zweistoffdüsen 1 ausgerichtet. Quer dazu hat der Modulkörper 2 einen Zylinder 5, in welchem ein Steuerkolben 6 beweglich zwischen einem Zylinderdeckel 5.1 gegen die Kraft einer Druckfeder 6.1 in einer Bohrung 6.2 beweglich ist. Der Steuerkolben 6 läßt sich durch das über die Steckverschraubung 32 zugeführte Gas, vorzugsweise Druckluft, betätigen, welche auf die in Fig. 10 obere Seite des Steuerkolbens 6 geleitet werden kann. Die Betätigung des Steuerkolbens 6 kann jedoch auch über eine getrennte Druckgasquelle geschehen.

Der Steuerkolben 6 wirkt über einen Luftventilstößel 10 und einen Ölventilstößel 11 gleichzeitig je auf einen Luftventilschließkörper 7 und einen Ölventilschließkörper 8 gegen die Kräfte von entsprechenden Druckfedern 7.1 und 8.1, um entsprechende Durchlässe für Druckluft und Drucköl zu öffnen, damit die Druckluft direkt und das Drucköl durch nachfolgend noch beschriebene Kapillarschläuche 28, 29, 30 über die Längsbohrung 4.1 zu den Bohrungen 4.2 und von dort in die Zweistoffdüsen strömen können.

Der Steuerkolben 6 ist in dem Zylinder 5 durch den Zylinderdeckel 5.1 gehalten, während die Ventilschließkörper 7, 8 durch Verschlußkappen 9 im Modulkörper 2 gehalten sind. Die erforderliche Dichtung des Steuerkolbens 6 wird durch O-Ringe 15, 17 und diejenige der Ventilschließkörper 7, 8 durch O-Ringe 14 sichergestellt.

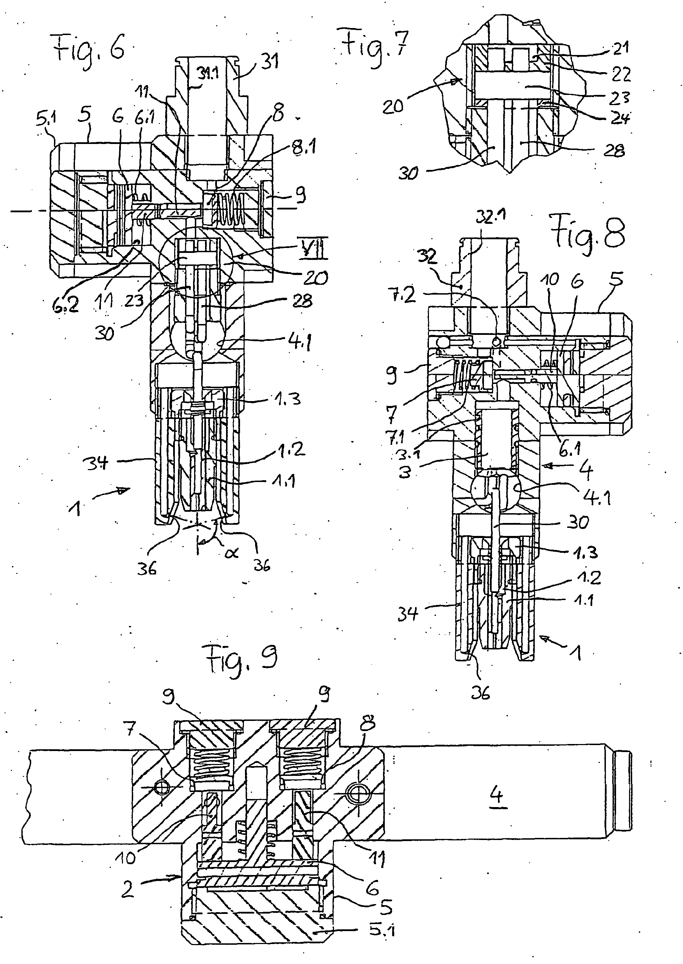

Im Düsenkörper 4 sind in Fluchtung zu den jeweiligen Anschlüssen 31, 32 in den zugehörigen Bohrungen 31.1 und 32.1 ein Luftadapter 3 und eine Stopfbuchse 20 parallel zueinander angeordnet. Der Luftadapter 3 weist eine dicht in seiner Aufnahmebohrung aufgenommene Hülse auf. Die Stopfbuchse 20 hat einen Ölvolumenbegrenzer 22 in Form eines Zylinderkörpers, der auf der dem Ölventil 8, 11 zugewandten Seite einen zylindrischen Hohlraum 21 hat, ferner eine Dichtscheibe 23 und einen Druckring 24. Die Teile 22 bis 24 sind mittels einer Klemmschraube 25 verspannt und von insgesamt drei Kapillarschläuchen 28, 29, 30 durchsetzt, welche mit ihren offenen Enden in den Hohlraum 21 hineinragen (vergleiche Fig. 7 und 10). Die Dichtscheibe 23 besteht aus FKM-Kunststoff (Handelsname: Viton).

Die Kapillarschläuche 28, 29, 30 sind mit ihren anderen Enden aus der Stopfbuchse 20 heraus in die Durchgangsbohrung 4.1 und von dort jeweils einzeln durch eine Bohrung 4.2 in die betreffende Zweistoffdüse 1 eingeführt.

In Fig. 8 ist bei 7.2 ein Luftbypaß angedeutet, der von dem Luftraum im Luftanschluß 32 das Luftventil überbrückt, welches durch den Luftventilschließkörper 7 und den Luftventilstößel 10 gebildet ist. Im Zustand nach Fig. 8 ist dieses Ventil in seiner geschlossenen Stellung dargestellt. Gleichwohl kann Luft über den Luftbypaß 7.2 in den Luftraum innerhalb der Durchgangsbohrung 4.1 und von dort ungehindert zu jeder Zweistoffdüse 1 strömen, so daß bei Betätigung des Steuerkolbens 6 jederzeit Druckluft an derZweistoffdüse ohne Zeitverzögerung ansteht. Der Steuerkolben öffnet gleichzeitig mit dem Luftventil das nicht überbrückte Ölventil 8, 11 durch Drücken des Ölventilstößels 11 gegen den Ventilschließkörper 8, der in seiner Bohrung gegen die Kraft der Feder 8.1 in eine Offenstellung verschoben wird, so daß Öl in den Hohlraum 21 und von dort in die offenen Enden der Kapillarschläuche 28, 29, 30 und zu den jeweiligen Zweistoffdüsen 1 strömen kann.

Der Druck des über den Ölanschluß 31 eingespeisten Drucköles pflanzt sich sehr viel schneller fort als der Druck in Luft, so daß sich in den Zweistoffdüsen mit ausreichender Geschwindigkeit auch ein hydraulischer Druck aufbaut. Das in der Mischkammer jeder Zweistoffdüse gebildete Gemisch aus Drucköl und Druckluft wird ummantelt von einem inneren Luftmantel und einem äußeren Luftmantel aus der Zweistoffdüse abgegeben. Dieser Gemischstrahl wird dann durch die von der gleichen Druckluft beaufschlagten Strahlformdüse 35 von beiden Seiten her flach gedrückt und dadurch in der Länge so weit gestreckt, daß die Enden der Gemischstrahlen im Abstand c benachbarter Zweistoffdüsen 1 einander überlappen. Somit läßt sich ein unter dem Steuermodul in geeignetem Abstand bewegtes, umzuformendes Blech mit einer dosierten, sehr dünnen Ölschicht gleichmäßig besprühen und somit auf einen Umformvorgang, wie einen Stanzvorgang, optimal vorbereiten.

Durch Entfernen der Verschlußstopfen 33 und Ankoppeln eines oder mehrerer gleichartiger Steuermodule läßt sich entsprechend jeder Bandbreite eines zu besprühenden Blechbandes eine ausreichende Breite mit dem Öl besprühen. Anstatt in einer geraden Reihe können benachbarte Zweistoffdüsen auch in einem durch ein Formwerkzeug vorgegebenen Muster angeordnet sein, derart, daß ein stationär unter dem Steuermodul befindliches Werkstück angepaßt an die Werkzeugkontur des Umformwerkzeugs besprüht werden kann.

Ein Steuermodul gemäß der Erfindung läßt sich mit Vorteil auch bei Zerspanaufgaben einsetzen, wo zum gleichzeitigen gezielten Kühlschmieren mehrere Wirkzonen zwischen einem Werkstück und schneidenden Werkzeugen eine feindosierte, möglichst nebelfreie Besprühung der Wirkzonen erwünscht ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Zweistoffdüse
- 1.1: Düsenmantel
- 1.2: Düsenkern
- 1.3: Luftmantelerzeuger
- 2: Modulkörper
- 3: Luftadapter
- 3.1: Bohrung
- 4: Düsengehäuse
- 4.1: Durchgangsbohrung
- 4.2: Düsenaufnahmebohrung
- 5: Zylinder
- 5.1: Zylinderdeckel
- 6: Steuerkolben
- 6.1: Druckfeder
- 6.2: Bohrung
- 7: Luftventilschließkörper
- 7.1: Druckfeder
- 7.2: Luft-Bypass
- 8: Ölventilschließkörper
- 8.1: Druckfeder
- 9: Verschlußkappe
- 10: Luftventilstößel
- 11: Ölventilstößel
- 12: O-Ring
- 13: O-Ring
- 14: O-Ring
- 15: O-Ring

- 17: O-Ring
- 20: Stopfbuchse
- 21: Hohlraum
- 22: Ölvolumenbegrenzer
- 23: Dichtscheibe
- 24: Druckring
- 25: Klemmschraube
- 28: Kapillarschlauch
- 29: Kapillarschlauch
- 30: Kapillarschlauch
- 31: Ölanschluß/Steckverschraubung für Ölzuführschlauch
- 31.1: Bohrung
- 32: Luftanschluß/Steckverschraubung für Luftzuführschlauch
- 32.1: Bohrung
- 33: Verschlußstopfen
- 34: Strahlformaufsatz
- 35: Strahlformdüse

## Patentansprüche

1. Steuermodul für eine Düsenanordnung mit mindestens einer Zweistoffdüse (1,1') zum Besprühen der Wirkzonen zwischen einem Werkzeug und einem Werkstück mit einem Gas-/Flüssigkeitsgemisch, umfassend
- eine Gaszufuhrleitung (32) für Druckgas und eine Flüssigkeitszuführleitung (31) für Druckflüssigkeit zu der Zweistoffdüse (1),
- ein Flüssigkeitsabsperrventil (8,11) in der Flüssigkeitszuführleitung,
- eine Steuervorrichtung (6) zum Öffnen oder Schließen des Flüssigkeitsabsperrventiles (8,11),
- eine dem Flüssigkeitsabsperrventil (8,11) nachgeschaltete Stopfbuchse (20), von der eine Zweigleitung in Form mindestens eines Kapillarschlauchs (28, 29, 30) zu der oder jeder Zweistoffdüse (1) führt,
- welche Stopfbuchse (20) einen Hohlraum (21) umfasst, der durch einen Flüssigkeitsvolumenbegrenzer (22) definiert ist, wobei die ventilseitigen offenen Enden des oder der Kapillarschläuche (28,29,30) in den Hohlraum (21) eintauchen, und
- ein Gasabsperrventil (7) in der Gaszuführleitung (32);
**dadurch gekennzeichnet, dass**
- die Steuervorrichtung (6) zum Öffnen oder Schließen des Gasabspemrentils (7) gemeinsam mit dem Flüssigkeitsabsperrventil (8) eingerichtet ist,
- die Steuervorrichtung (6) durch das Druckgas betätigbar ist und
- ein Gasbypass (7.2) das Gasabsperrventil (7) überbrückt.

2. Steuermodul nach Anspruch 1, **dadurch gekennzeichnet, dassß** die Steuervorrichtung einen auf einer Seite durch Druckgas beaufschlagbaren Steuerkolben (6) hat, der mit seiner anderen Seite auf Ventilschließkörper (11, 10) der Flüssigkeits- und Gasabsperrventile (8, 7) mechanisch gegen Federkraft (6.1, 7.1, 8.1) einwirkt.

3. Steuermodul nach einem der Ansprüche 1 oder 2, **dadurch gekennzeichnet, dass** die oder jede Zweistoffdüse (1) eine Mischkammer hat, in der Schmieröl und Luft vorgemischt werden, und dass ein innerer Luftmantelstrahl erzeugt ist, der den aus dem Düsenaustritt kommenden Gemischstrahl bündelt, und daß ergänzend ein äußerer Luftmantelstrahl vorgesehen sein kann.

4. Steuermodul nach einem der Ansprüche 1 bis 3, **dadurch gekennzeichnet, dass** die oder jede Zweistoffdüse (1) einen Strahlfbrmaufsatz (34) mit mindestens einer in Richtung zum aus der Zweistoffdüse austretenden Gemischstrahl geneigten Strahlformdüse (36) hat.

5. Steuermodul nach Anspruch 4, **dadurch gekennzeichnet, dass** der Strahlformaufsatz (34) diagonal gegenüberliegend zwei Strahlformdüsen (36) aufweist.

6. Steuermodul nach Anspruch 4 oder 5, **dadurch gekennzeichnet, dass** die oder jede Strahlformdüse (36) einen Winkel α im Bereich 90° < α ≤ 120° bezüglich der Achse der Zweistoffdüse (1) einschließen und einen Durchmesser (D) im Bereich 1 mm ≤ D ≤ 3 mm haben.

7. Steuermodul nach einem der Ansprüche 1 bis 6, **dadurch gekennzeichnet, dass** der Innendurchmesser (d) der Kapillarschläuche (28, 29, 30) im Bereich 0,2 mm ≤ d ≤ 1,4 mm liegt.

8. Steuermodul nach einem der Ansprüche 1 bis 7, **dadurch gekennzeichnet, dass** die ventilseitigen, offenen Enden des oder der Kapillarschläuche (28,29,30) durch eine Dichtscheibe (23) hindurchgeführt sind, die vorzugsweise aus FKM-Kunststoff (Viton) besteht.

9. Steuermodul nach Anspruch 8, **dadurch gekennzeichnet, dass** der Flüssigkeitsvolumenbegrenzer (22) ein Zylinderkörper ist, der auf einer Seite den zylindrischen Hohlraum (21) aufweist und von den Kapillarschläuchen (28,29,30) durchsetzt ist und dass die Dichtscheibe (23) gegen den Flüssigkeitsvolumenbegrenzer (22) mittels eines Druckringes (24) verspannt ist.

10. Verwendung eines Steuermoduls nach einem der Ansprüche 1 bis 9 zum Besprühen der Oberfläche eines umzuformenden Werkstückes, wie eines Bleches, mit einem Flüssigkeitsfilm, wobei der Steuermodul mindestens zwei Zweistoffdüsen (1) aufweist, die mit Abstand voneinander angeordnet sind, der so gewählt ist, dass die Spritzbilder der von den Zweistoffdüsen (1) auf die Werkstückoberfläche gesprühten Gemischstrahlen einander überlappen.

11. Verwendung nach Anspruch 10, bei der mehrere Steuermodule in Serie geschaltet sind.

12. Verwendung nach Anspruch 10 oder 11, bei der bis zu drei Zweistoffdüsen (1) in einer geradlinigen Reihe quer zur Bewegungsrichtung einer im Sprühbetrieb relativ zu dem Steuermodul bewegten Werkstückoberfläche angeordnet sind.

13. Verwendung nach Anspruch 10 oder 11, bei dem die Zweistoffdüsen (1) und eine zu besprühende Werkstückoberfläche im Sprühbetrieb relativ zueinander feststehen und die Zweistoffdüsen (1) in einem Muster angeordnet sind, das der Anordnung der Wirkzonen zwischen einem Werkzeug und einem umzuformenden Werkstück entspricht.

14. Verwendung eines Steuermoduls nach einem der Ansprüche 1 bis 9 zum Besprühen der Wirkzonen zwischen einer Werkstückoberfläche und einem spanenden Werkzeug, insbesondere einem Fräswerkzeug.

## Claims

1. A control module for a nozzle arrangement, including at least one two-component nozzle (1,1')for spraying a gas/liquid mixture on the zones of action between a tool and a workpiece, comprising
- a gas supply line (32) for pressurized gas and a liquid supply line (31) for pressurized liquid, both leading to the two-component nozzle (1),
- a liquid check valve (8,11)in the liquid supply line,
- a control device (6) for opening or closing of the liquid check valve (8,11),
- a packing (20) disposed downstream of the liquid check valve (8,11), a branch line in the form of a capillary tube (28,29,30)extending from the packing (20) to the or each two-component nozzle (1)
- said packing (20) including a cavity (21) defined by a liquid volume limiter (22), wherein the valve-side open ends of the capillary tube or tubes dip into the cavity (21), and
- a gas check valve (7) is provided in the gas supply line (32),
**characterized in that**
- the control device (6) is designed for opening or closing of the gas check valve (7) together with the liquid check valve (8),
- the control device is to be actuated by the pressurized gas,
and
- a gas bypass (7.2) bridges the gas check valve (7).

2. Control module as claimed in claim 1, **characterized in that** the control device includes a control piston (6) adapted to be pressurized at one end by pressurized gas and, by its other end, acting mechanically against spring pressure (6.1, 7.1,8.1)on valve plugs (11,10)of the liquid and gas check valves (8,7).

3. Control module as claimed in claim 1 or 2, **characterized in that** the or each two-component nozzle (1) includes a mixing chamber in which liquid and gas are premixed, and an inner air jacket jet is generated which bundles the mixed jet exiting from the nozzle outlet, and an outer air jacket jet may be provided in addition.

4. Control module as claimed in one of claims 1 to 3, **characterized in that** the or each two-component nozzle (1) comprises a jet forming attachment (34) including at least one jet forming nozzle (36) which is inclined with respect to the mixed jet exiting from the two-component nozzle.

5. Control module as claimed in claim 4, **characterized in that** the jet forming attachment (34) comprises two diagonally opposed jet forming nozzles (36).

6. Control module as claimed in claim 4 or 5, **characterized in that** the or each jet forming nozzle (36) include an angle α in the range of 90° ≤ α ≤ 120° with respect to the axis of the two-component nozzle (1) and have a diameter (D) in the range of 1 mm ≤ D ≤ 3 mm.

7. Control module as claimed in one of claims 1 to 6, **characterized in that** the inner diameter (d) of the capillary tubes (28,29,30)lies in the range of 0.2 mm ≤ d ≤ 1.4 mm.

8. Control module as claimed in one of claims 1 to 7, **characterized in that** the valve-side open ends of the capillary tubes (28,29,30) are passed through a sealing disc (23) which, preferably, is made of FKM plastics (Viton).

9. Control module as claimed in claim 8,**characterized in that** the liquid volume limiter (22) is a cylindrical body which at one side provides the cylindrical cavity (21) and is penetrated by the capillary tubes (28,29,30) and **in that** the sealing disc (23) is pressed against the liquid volume limiter (22) by means of a pressing ring (24).

10. Use of a control module as claimed in one of claims 1 to 9 for spraying a mixed jet of gas and liquid on the surface of a workpiece to be shaped, such as a sheet, to generate a liquid film on said surface, the control module comprising at least two two-component nozzles which are arranged at such spacing from each other that spray patterns of the mixed jets sprayed by the two-component nozzles on the workpiece surface overlap each other.

11. The use as claimed in claim 10, **characterized in that** a plurality of control modules are connected in series.

12. The use as claimed in claim 10 or 11, **characterized in that** up to three two-component nozzles are disposed in a rectilinear row across the travelling direction of a workpiece surface which is moved with respect to the control module during the spraying operation.

13. The use as claimed in claim 10 or 11, **characterized in that** the two-component nozzles and a workpiece surface to be sprayed on are fixed with respect to each other during the spraying operation, and the two-component nozzles (1) are disposed in a pattern which corresponds to the arrangement of the zones of action between a tool and a workpiece to be shaped.

14. Use of a control module as claimed in one of claims 1 to 9 for spraying a mixed jet of gas and liquid on the zones of action between a workpiece surface and a cutting tool, especially a milling tool.

## Revendications

1. Module de commande pour un dispositif à buses avec au moins une buse binaire (1, 1') pour la pulvérisation d'un mélange gaz/liquide sur les zones actives entre un outil et une pièce, comprenant :
- une conduite d'amenée de gaz (32) pour l'amenée de gaz sous pression et une conduite d'amenée de liquide (31) pour l'amenée de liquide sous pression vers la buse binaire (1),
- une soupape d'arrêt de liquide (8, 11) dans la conduite d'amenée de liquide,
- un dispositif de commande (6) pour l'ouverture ou la fermeture de la soupape d'arrêt de liquide (8, 11),
- un presse-étoupe (20) monté en aval de la soupape d'arrêt de liquide (8, 11), dont part une conduite dérivée sous la forme d'au moins un tuyau capillaire (28, 29, 30) vers la ou vers chaque buse binaire (1),
- ledit presse-étoupe (20) comprenant une cavité (21) définie par un limiteur volumétrique de liquide (22), les extrémités ouvertes côté soupape du ou des tuyaux capillaires (28, 29, 30) plongeant dans la cavité (21), et
- une soupape d'arrêt de gaz (7) dans la conduite d'amenée de gaz (32) ;
**caractérisé en ce que**
- le dispositif de commande (6) pour l'ouverture ou la fermeture de la soupape d'arrêt de gaz (7) est ajusté en commun avec la soupape d'arrêt de liquide (8),
- le dispositif de commande (6) est actionnable par le gaz sous pression, et
- une dérivation du gaz (7.2) ponte la soupape d'arrêt de gaz (7).

2. Module de commande selon la revendication 1, **caractérisé en ce que** le dispositif de commande est pourvu d'un piston de commande (6) dont un côté peut être soumis à l'application de gaz sous pression, et qui par son autre côté agit mécaniquement contre une force de ressort (6.1, 7.1, 8.1) sur des corps de fermeture de soupape (11, 10) des soupapes d'arrêt de liquide et de gaz (8, 7).

3. Module de commande selon l'une des revendications 1 ou 2, **caractérisé en ce que** la ou chaque buse binaire (1) est pourvue d'une chambre de mélange, où de l'huile de lubrification et de l'air sont préalablement mélangés, et **en ce qu'**un jet intérieur d'enveloppe d'air qui lie le jet de mélange arrivant de la sortie de buse est généré, et **en ce qu'**un jet extérieur d'enveloppe d'air peut être prévu en complément.

4. Module de commande selon l'une des revendications 1 à 3, **caractérisé en ce** la ou chaque buse binaire (1) est pourvue d'une couronne de formage de jet (34) avec au moins une buse de formage de jet (36) inclinée dans la direction du jet de mélange sortant de la buse binaire.

5. Module de commande selon la revendication 4, **caractérisé en ce que** la couronne de formage de jet (34) comporte deux buses de formage de jet (36) opposées diagonalement l'une à l'autre.

6. Module de commande selon la revendication 4 ou la revendication 5, **caractérisé en ce que** la ou chaque buse de formage de jet (36) forme un angle α compris entre 90° et 120° par rapport à l'axe de la buse binaire (1), et a un diamètre (D) compris entre 1 mm et 3 mm.

7. Module de commande selon l'une des revendications 1 à 6, **caractérisé en ce que** le diamètre intérieur (d) des tuyaux capillaires (28, 29, 30) est compris entre 0,2 mm et 1,4 mm.

8. Module de commande selon l'une des revendications 1 à 7, **caractérisé en ce que** les extrémités ouvertes côté soupape du ou des tuyaux capillaires (28, 29, 30) traversent une rondelle d'étanchéité (23), laquelle se compose préférentiellement de matière synthétique FKM (Viton).

9. Module de commande selon la revendication 8, **caractérisé en ce que** le limiteur volumétrique de liquide (22) est un corps cylindrique qui comporte la cavité cylindrique (21) d'un côté et est traversé par les tuyaux capillaires (28, 29, 30), et **en ce que** la rondelle d'étanchéité (23) est contrainte contre le limiteur volumétrique de liquide (22) au moyen d'une bague de pression (24).

10. Utilisation d'un module de commande selon l'une des revendications 1 à 9 pour la pulvérisation d'un film liquide à la surface d'une pièce à déformer, telle qu'une tôle, ledit module de commande comportant au moins deux buses binaires (1) espacées l'une de l'autre d'un intervalle choisi de manière que les cônes de pulvérisation des jets de mélange projetés par les buses binaires (1) sur la surface de la pièce se chevauchent l'un l'autre.

11. Utilisation selon la revendication 10, où plusieurs modules de commande sont montés en série.

12. Utilisation selon la revendication 10 ou la revendication 11, où jusqu'à trois buses binaires (1) sont disposées sur une rangée linéaire transversalement à la direction de mouvement d'une surface de pièce déplacée par rapport au module de commande en mode pulvérisation.

13. Utilisation selon la revendication 10 ou la revendication 11, où les buses binaires (1) et une surface de pièce à pulvériser sont fixes les unes par rapport à l'autre en mode pulvérisation, et où les buses binaires (1) sont disposées suivant un motif correspondant à l'agencement des zones actives entre un outil et une pièce à déformer.

14. Utilisation d'un module de commande selon l'une des revendications 1 à 9 pour la pulvérisation sur les zones actives entre une surface d'outil et un outil d'usinage par enlèvement de copeaux, en particulier un outil de fraisage.
